# EUROPÄISCHE PATENTSCHRIFT

(11) **EP 0 686 727 B1**
(45) Veröffentlichungstag und Bekanntmachung des Hinweises auf die Patenterteilung: **22.12.1999**
(21) Anmeldenummer: 95104185.4
(22) Anmeldetag: 21.03.1995
(51) Int. Cl.: D21H 17/71, D21H 17/14

(54) **Leimungsmittel für die Oberflächen- und Masseleimung von Papier**
Sizing composition for internal and surface sizing of paper
Composition pour le collage de papier en surface et dans la masse

(30) Priorität: 08.04.1994 DE 4412136
(43) Veröffentlichungstag der Anmeldung: 13.12.1995
(73) Patentinhaber: PTS Papiertechnik Beteiligungsgesellschaft mbH, 60386 Frankfurt am Main (DE)
(72) Erfinder: Schultz, Wolf-Stefan, Dr, D-61118 Bad Vilbel (DE)
(74) Vertreter: Beil, Hans Chr., Dr.

(56) Entgegenhaltungen:
- EP-A- 0 056 876
- EP-A- 0 259 671
- EP-A- 0 369 328
- EP-A- 0 418 015

## Beschreibung

Die Erfindung betrifft den in den Patentansprüchen beschriebenen Papierleim für die Masseleimung und Oberflächenleimung.

Die Innenleimung von Papier mit Kolophoniumharz und mit verstärktem Kolophoniumharz wurde von Casey in Pulp and Paper, 2. Auflage, Band II: Papermaking, Kapitel XIII, Seiten 1043-1066, beschrieben. Verstärkte Kolophoniumharze können durch Umsetzen von Maleinsäureanhydrid oder anderen dienophilen Verbindungen mit Kolophonium unter Erhöhung der Zahl der Carbonsäuregruppen hergestellt werden. Ein typischer verstärkter Leim kann etwa 1 bis 30% Maleinsäureanhydrid enthalten.

Es wird allgemein anerkannt, dass ein Leim mit hohem Anteil an freiem Kolophoniumharz zu einer besseren Leimung führt und weniger Alaun erfordert. Dabei ist es durch Verwendung eines Schutzkolloids möglich, einen hochstabilen Leim herzustellen, der bis zu 90% freies Kolophonium enthält. Nach dem Bewoid-Verfahren (Sandermann - Naturharze, Terpentinöl, Tallöl S. 205 Springer-Verlag 1960 ) wird ein Leim mit hohem Anteil an freiem Kolophonium hergestellt, der etwa 90% freies, in einer kleinen Menge Kolophoniumseife dispergiertes und durch die Anwesenheit von etwa 2% Casein oder eines anderen Proteins stabilisiertes Kolophonium enthält. Das Casein wird als Schutzkolloid eingesetzt, um das Wachstum von Kolophoniumteilchen zu verhindern, wodurch sie in feinem Zerteilungszustand gehalten werden. Beim Bewoid-Verfahren wird das Kolophonium in Gegenwart von 1 bis 2% Natriumhydroxid und etwa 2% Casein mechanisch zerteilt. Das Kolophoniumharz wird erhitzt und mechanischen Scherspannungen ausgesetzt, bis es in kleine Teilchen unterteilt ist. Eine kleine Menge Ätznatron wird dann dem geschmolzenen Kolophonium zugesetzt, um es teilweise zu verseifen, und dann wird Casein zur Stabilisierung des dispergierten Kolophoniums zugesetzt. Das gelöste Casein wird unter kräftigem Rühren in das geschmolzene Kolophoniumharz eingearbeitet, worauf eine zusätzliche Menge NaOH zugesetzt wird oder die heisse Kolophoniumschmelze wird in Casein enthaltendes Wasser gespritzt. Schliesslich wird Wasser zugesetzt, um eine fertige Dispersion mit etwa 30 - 45% Festanteilen zu ergeben, die in dieser Form verwendet wird. Dieses Verfahren wird auch als "Inversionsverfahren zur Herstellung von Kolophoniumharzleim" und der so hergestellte Kolophoniumharzleim als "Invertleim" bezeichnet.

Unter Anwendung des Inversionsverfahrens wurde nach der US-A-23 93 179 ein Leim mit freiem Kolophoniumharz hergestellt, wobei anstelle von Natriumhydroxid ein nicht alkalisches Dispersionsmittel, z.B. ein sulfonierter höherer Fettalkohol, verwendet wurde. Das Kolophonium wurde geschmolzen, und die gewünschte Menge Dispersionsmittel wurde unter zur Bildung einer homogenen geschmolzenen Masse ausreichendem Rühren zugesetzt. Dann wurde nach und nach unter raschem Rühren eine praktisch neutrale oder schwach saure wässrige Lösung oder Dispersion eines Schutzkolloids, z.B. Casein, zugesetzt, wodurch sich eine pastenähnliche Dispersion mit hohem Feststoffanteil bildete, die dann mit Wasser auf einen Feststoffgehalt von 40 bis 60 Gew.-% verdünnt wurde.

In dem Prosize-Verfahren (Sandermann - Naturharze, Terpentinöl, Tallöl S. 205 Springer-Verlag 1960) zur Herstellung eines geschützten Leims mit einem hohen Anteil an freiem Kolophoniumharz wurden durch die Gegenwart eines grenzflächenaktiven Proteins, z.B. Sojabohnen-Protein, die Kolophoniumteilchen am Wachsen zu grösseren Aggregaten gehindert.

Nach der DE-B-11 31 348 waren die verstärkten Kolophoniumharze bisher nicht zur Herstellung von Dispersionen geeignet, da sie meistens zu hohe Schmelzpunkte besassen, zur Kristallisierung neigten oder beim Dispergieren feine Krusten bildeten, die zu Sedimentationserscheinungen führten. Das Patent beschreibt einen Papierleim und ein Verfahren zu dessen Herstellung in Form einer wässrigen Dispersion mit einem hohen Gehalt an freiem Kolophoniumharz, bei dem verstärktes Kolophoniumharz bei erhöhten Temperaturen mit Fettsäuren, Fettsäuregemischen und/oder Naphthensäuren gemischt und die Dispersion in bekannter Weise durchgeführt wurde. Das Verfahren wurde als Inversionsverfahren angewandt.

Die DE-A-24 26 038 offenbart ein Verfahren zur Herstellung einer praktisch stabilen wässrigen Dispersion eines zur Verwendung beim Leimen von zelluloseartigen Fasern zur Papierherstellung geeigneten Materials auf Kolophoniumgrundlage, wobei eine instabile, wässrige Dispersion, die wenigstens 5% Feststoffe, bestehend aus 0 bis 95% Kolophonium und 100 bis 5% eines Reaktionsproduktes von Kolophonium mit einer sauren, den Rest -C=C-C=O enthaltenden Verbindung ent hielt, wobei die Menge von als Addukt gebundener saurer Verbindung etwa 1 bis 20% des Gesamtfeststoffgewichts betrug, unter einem Druck von etwa 142 bis 563 bar und bei einer Temperatur von 150 bis 190°C in Anwesenheit eines anionischen Dispergiermittels homogenisiert wurde. Als anionische Dispergiermittel wurden Materialien auf der Grundlage verseiften Kolophoniums, Natrium-alkylbenzosulfonat, Natrium-naphthalinsulfonsäure, Natrium-laurylsulfat oder das Ammoniumsalz des Sulfatesters eines Alkylphenoxy(polyetylenoxy)-ethanols eingesetzt.

Die SE-A-74 10 018-1 beschreibt eine praktisch stabile, wässrige Dispersion, die im wesentlichen aus Wasser, Kolophoniummaterial und als Stabilisator für das Kolophoniummaterial einem Alkalimetall-alkylbenzolsulfonat bestand. Die Dispersionen wurden hergestellt, indem man ein vorbereitetes Gemisch der Komponenten durch einen Homogenisator führte.

Die US-A-39 06 142 offenbart ein Mittel zum Leimen von Papier ohne Verwendung von Aluminiumsulfat, das eine stabile wässrige Dispersion eines durch Umsetzen mit einer alpha,beta-ungesättigten Carbonsäure oder einem entsprechenden Anhydrid verstärkten Kolophoniumharzes, ein Schutzkolloid, z.B. Casein und eine flüchtige Base, z.B. Ammoniak, enthielt, wobei wenigstens 90% des verstärkten Kolophoniumharzes unverseift waren. Zur Herstellung dieses Mittels wurde das Inversionsverfahren angewandt, wobei zunächst verstärktes Kolophonium in einem mit Rühr- und Heizeinrichtung ausgestatteten Behälter geschmolzen wurde. Dann wurde in einem anderen Behälter ein Dispergier- und Stabilisiermittel hergestellt, indem man eine abgemessene Menge eines Schutzkolloids, z.B. Casein, und eine abgemessene Menge einer flüchtigen Base, z.B. Ammoniak, in Wasser löste. Anschliessend wurde dem geschmolzenen Kolophonium rasch das zubereitete Dispergier- und Stabilisiermittel zugesetzt, wobei während und nach der Zugabe Hochgeschwindigkeitsrühren oder ein anderes intensives Durchmischen zur Anwendung gelangte. Schliesslich wurde der Feststoffgehalt der anfallenden wässrigen Kolophoniumdispersion durch Zugabe einer berechneten Menge an Wasser eingestellt.

Aus der DE-A-26 54 496 ist ein Invertleim für die Masseleimung von Papier bekannt, der eine wässrige Dispersion eines verstärkten Kolophoniumharzes enthielt und dessen Dispergiermittel in Lösung Anionen aus Alkylphenylpolyglycolethern oder Alkylpolyglycolethern mit endständiger Sulfonatgruppe bilden. Bei der Herstellung dieses bekannten Papierleims sollte die Verwendung von Schutzkolloiden, wie Casein, nicht erforderlich sein, musste jedoch mit heissem Inversionswasser gearbeitet werden.

Aus der DE-A-28 45 091 ist ein Invertleim für die Masseleimung und Oberflächenleimung von Papier bekannt, der in der wässrigen Harzdispersion als Dispergiermittel Verbindungen enthält, die in Lösung oder Dispersion Anionen der gleiche Art wie aus der DE-A-26 54 496 bekannt bilden, jedoch ist die enständige Sulfonatgruppe durch eine Carboxylatgruppe ersetzt.

In EP-A-0 056 876 wird ein Leimungsmittel beschrieben, das aus einer wässrigen Dispersion eines verstärkten Kolophonuimharzes, näher definierter wasserlöslicher oder in Wasser dispergierbarer kationischer Stärke und einem anionischen oberflächenaktiven Mittel besteht. Die Herstellung der Dispersion erfolgt in der Weise, daß dem in Methylenchlorid gelösten Harz eine wässrige Lösung von Stärke und NaOH zugesetzt, die Mischung homogemnisiert und das Lösungsmittel dann abgestreift wurde.

Die vorstehend beschriebenen Leimungsmittel wurden in einem pH-Bereich von 4,5 - 6 eingesetzt und erforderten zur Fixierung auf der Faser verhältnismässig hohe Mengen Aluminiumsulfat, durch die das Abwasser belastet wird. Da es sich bei den verwendeten Emulgatoren gleichzeitig auch um Netzmittel handelt, wie sie aus der Waschmittelindustrie bekannt sind, sind sie bezogen auf eingesetztes Harz weniger wirksam als mit Casein stabilisierte Produkte.

Eine Verbesserung hinsichtlich des pH-Wertes ist in der Patentschrift EP-A-0 259 671 beschrieben. Auch dieses Produkt stellt einen Invertleim dar. Ein Produkt ohne Schutzkolloid auf Harzbasis ist bisher für die Leimung im Neutralbereich nicht beschrieben.

Die EP-A-0200002 beschreibt ein Verfahren zur Neutralleimung mit einem Einkomponenten-Produkt, das Polyaluminiumchlorid und einen Invertleim enthält. Diese Produkte sind nicht lange lagerfähig, da sie sehr thixotrop sind und deshalb ständig gerührt werden sollen. Ein weiterer Nachteil dieser Produkte ist die geringe Harzmenge, d.h. es wird viel Wasser transportiert und die Einsatzmengen sind sehr hoch - ca. 10 % gegenüber 3 % bei bisher bekannten Leimungsmitteln.

Alle Leimungsmittel, die ein Schutzkolloid enthalten, sind metastabile Zubereitungen, die nur eine begrenzte Lagerfähigkeit aufweisen und zudem, wenn sie Casein enthalten, konserviert werden müssen.

In EP-A-0 369 328 und 0 418 015 werden Dispersionen von Ketendimeren enthaltend Ligninsulfonat zur Papierleimung beschrieben.

Der Erfindung liegt die Aufgabe zugrunde, einen Masse- und Oberflächenleim für den pH-Bereich 4,5 - 8,5 zur Verfügung zu stellen, der nach einem einfachen Verfahren herstellbar ist und nicht die Nachteile der herkömmlichen Invertleime besitzt.

Diese Aufgabe wird erfindungsgemäss dadurch gelöst, dass ein Ester eines unverstärkten, disproportionierten oder verstärkten Kolophoniumharzes, dessen Basisharz Tallharz, Balsamharz oder Wurzelharz sein kann, mit einem Schutzkolloid, bestehend aus Stärke und einem Ligninsulfonat, dispergiert wird. Dadurch entsteht das Leimungsmittel gemäß Anspruch 1.

Überraschenderweise wurde festgestellt, dass die hergestellten Dispersionen im Neutralbereich eine bessere Wirkung zeigen als herkömmliche Dispersionen und zudem, da ohne Casein hergestellt, wirtschaftlicher arbeiten. Ligninsulfonat fällt in großen Mengen bei der Zellstoffherstellung an und ist demzufolge immer verfügbar. Besonders überraschend ist die Tatsache, daß Ligninsulfonat die Wirksamkeit der Hydrophobierung, bezogen auf eingesetztes Harz, in keiner Weise schmälert.

Noch überraschender ist, daß die aus diesen Dispersionen hergestellten Einkomponentenleime in keiner Weise zur Thixotropie neigen und deshalb keiner besonderen Vorkehrungen zur Lagerung bedürfen.

Als erfindungemäß einzusetzende Ester eignen die Ester der vorstehend genannten Harze mit Aminoalkoholen, z.B. Triethanolamin, Triisopropanolamin, Tributanolamin oder mit Glycerin, Glycol oder Polyglycolen. Wenn als Veresterungsmittel ein Plyglycol verwendet wird werden vorzugsweise Polyethylenglycole mit einem Molekulargewicht von 190 bis 1050 eingesetzt.

Das im erfindungsgemässen Leimungsmittel verwendete Kolophoniumharz kann jede der im Handel erhältlichen Arten von Kolophonium sein, z.B. Wurzelharz, Balsamharz, Tallharz und Gemische von zwei oder mehreren dieser Harze im Roh- oder raffinierten Zustand. Harze mit einer Kristallisationstendez können bei erhöhten Temperaturen mit Formaldehyd oder Paraformaldehyd in Gegenwart eines sauren Katalysators, z.B. p-Toluolsulfonsäure, in dem Fachmann bekannter Weise behandelt werden. So kann mit Formaldehyd behandeltes Harz verwendet werden und fällt unter den hier verwendeten Ausdruck "Kolophoniumharz".

Als verstärktes Kolophoniumharz kann ein Addukt-Reaktionsprodukt von Kolophonium mit einer sauren Verbindung, die den Rest 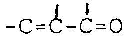 enthält, eingesetzt werden, das durch Umsetzen von Kolophonium mit der sauren Verbindung bei erhöhten Temperaturen, gewöhnlich etwa 150 bis 210°C, erhalten wird. Die eingesetzte Menge der sauren Verbindung wird so eingestellt, dass ein verstärktes Kolophoniumharz mit einem Gehalt von etwa 1 bis etwa 30 Gew.-%, bevorzugt etwa 5 bis etwa 12 Gew.%, der addierten sauren Verbindung, bezogen auf das Gewicht des verstärkten Kolophoniumharzes, erhalten wird. Verfahren zur Herstellung verstärkter Kolophniumharze sind in US-A-26 28 918 und 26 84 300 beschreiben. Beispiele für saure, den Rest -C=C-C=O enthaltende Verbindungen, die zur Herstellung des verstärkten Kolophoniumharzes verwendet werden können, sind die alpha, beta-ungesättigten organischen Säuren und ihre zugänglichen Anhydride; spezielle Beispiele hierfür sind Fumarsäure, Maleinsäure, Acrylsäure, Acrylamid, Maleinsäureanhydrid, Itaconsäure, Itaconsäureanhydrid, Citraconsäure und Citraconsäureanhydrid. Gegenbenenfalls können zur Herstellung des verstärkten Kolophoniumharzes Säuregemische eingesetzt werden. So kann z.b. ein Gemischt des Acrylsäureaddukts an Kolophonium und des Fumarsäureaddukts an Kolophonium zur Herstellung der erfindungsgemässen Harzleime verwendet werden.

Das Kolophoniumharz kann gegebenenfalls mit bekannten Zuschlagstoffen, z.B. Wachsen,insbesondere Paraffinwachs und mikrokristallines Wachs, Tallölderivate, Fettsäuren, insbesondere C-12 bis C-24-Fettsäuren, Kohlenwasserstoffharzen einschliesslich der von Erdölkohlenwassertoffen und Terpenen abgeleiteten, Spindelölen oder Polyglycolen, oder deren Gemische vermischt werden. Dies erfolgt in der Schmelze oder in Lösung, wobei von 1 bis zu 99 Gew.-%, vorzugsweise 30-50 Gew. % des Zuschlagstoffes, bezogen auf das Gewicht des Kolophoniumharzes, zugemischt werden können. Es kann auch ein Teil des Kolophoniumharzes durch ein Streckmittel ersetzt werden.

Zur Durchführung der Erfindung können auch Ester von Gemischen von unverstärktem, verstärktem oder disproportioniertem Kolophoniumharz sowie Gemische solcher Harze bzw. Harzmischungen mit Streckmittel und/oder Zuschlagstoffen und deren Mischungen verwendet werden.

Wird ein Ester eines Kolophoniumharzgemischs eingesetzt, so kann dieses Gemisch jedes der vorstehend genannten Harze, gegebenenfalls auch teilweise oder praktisch ganz hydriert oder disproportioniert, in beliebigen Anteilen enthalten.

Zusätzlich kann man den Ester des Kolophoniumharz bzw. dessen Gemische zur Verbesserung der Leimungswirkung im Neutralbereich mit handelsüblichen Alkylketendimeren der Kettenlänge C-14 bis C-22 modifizieren. Die Prozentgehalte an zu ersetzendem Harz betragen 0,5 - 25 %.

Gewünschtenfalls kann man dem Leimungsmittel kationische Verbindungen in üblichen Mengen zusetzen. In Betracht kommen insbesondere Polyethylenimine, Poly-(N, N-dimethyl-3,4-ethylen)-pyrrolidiniumchlorid, Polyallylamin, quarternisiertes Polytrimethylaminoethylmethacrylat, Dicyandiamidharze oder Polyacrylamid.

Zur Herstellung eines sog. Einkomponentenleims kann dem erfindungsgemäßen Leimungsmittel als Fällungsmittel ein Aluminiumsalz oder ein Gemisch von Aluminiumsalzen in üblichen Mengen zugesetzt werden. In Betracht kommen insbesondere Natriumaluminat, Aluminiumpolychlorid, Aluminiumsulfat, Aluminiumchlorid, Aluminiumphosphat und Polyaluminiumphosphat sowie Aluminiumnitrat und Polyaluminiumnitrat.

Zur Herstellung des erfindungsgemäßen Leimungsmittel wird geschmolzenes Harz, das gegebenenfalls mit den genannten Zuschlags- und Ersatzstoffen versetzt ist, mit der Schutzkolloidlösung unter Rühren versetzt und einer hohen Scherung unterworfen. Anschließend wird mit Wasser auf den gewünschten Feststoffgehalt eingestellt und man kann weitere Zuschlagsstoffe, wie kationische Verbindungen und/oder Aluminiumverbindungen zusetzen. Eine weitere Möglichkeit ist, daß man die Zuschlagstoffe oder Streckmittel der Schutzkolloidlösung zusetzt.

Die folgenden Beispiele sollen die Erfindung näher erläutern. Die angegebenen Zahlenwerte sind Gewichtsteile.

### Beispiel 1

150 Teile eines mit Maleinsäureanhydrid und Fumarsäure und anschließend mit Triethanolamin veresterten verstärkten geschmolzenen Kolophoniums mit der Säurezahl 190 wird mit einer Lösung von 22,5 Teilen kationischer Stärke und 3,1 Teilen Ligninsulfonat in 301 Teilen Wasser bei 100°C versetzt. Diese Mischung wird einer hohen Scherung unterworfen und anschließend mit Wasser auf einen Feststoffgehalt von 30 % eingestellt.

Das erhaltene Leimungsmittel ist ohne besondere zusätzliche Maßnahmen über lange Zeit lagerstabil und ergibt ausgezeichnete Leimungsergebnisse im Neutralbereich.

### Beispiel 2

160 Teile eines versterten Harzes aus Beispiel 1 werden mit 40 Teilen Fettsäure versetzt und auf 200°C erhitzt. Die Mischung wird mit einer Lösung von 48,8 Teilen kat. Stärke und 4,4 Teilen Ligninsulfonat in 300 Teilen Wasser versetzt und einer hohen Scherung unterworfen. Die erhaltene Dispersion wird nachfolgend mit 70 Teilen Aluminiumsulfat in 490 Teilen Wasser verdünnt. Dieses Produkt ist ohne weitere Fixiermittel, wie Aluminiumsulfat, Polyaluminiumchlorid etc., zur Papierleimung geeignet. Das Produkt unterscheidet sich in der Viskosität nicht von der aluminiumsalzfreien Einstellung und ist auch bei Temperatureinwirkung stabil.

### Beispiel 3

Durch Erhitzen eines Gemischs aus 91 Teilen eines Kolophoniums mit der Säurezahl 190 und 9 Teilen Glycol auf 200°C und Abkühlen nach vollständiger Umsetzung wurde ein verstärktes, mit Glycol verestertes Harz hergestellt. Nach dem Verfahren von Beispiel 1 wurde hieraus eine Dispersion mit 30 % Feststoffgehalt hergestellt.

### Beispiel 4

30 Teile eines mit Maleinsäureanhydrid und Fumarsäure umgesetzten und anschließend mit Triethanolamin veresterten (verstärkten) Kolophoniums der Säurezahl 190 werden mit 10 Teilen Paraffin zusammengeschmolzen und mit einer Lösung von 10 Teilen Alkylketendimer, 7,5 Teilen kationischer Stärke und 1 Teil Ligninsulfonat in 199 Teilen Wasser bei 100°C versetzt. Diese Mischung wird einer hohen Scherung unterworfen und anschließend mit Wasser auf einen Feststoffgehalt von 30 % eingestellt.

### Beispiel 5

25 Teile eines veresterten Harzes aus Beispiel 1 werden bei 200°C mit 25 Teilen Paraffin versetzt. Diese Mischung wird mit einer Lösung von 12,2 Teilen kationischer Stärke und 1 Teil Ligninsulfonat in 74,8 Teilen Wasser versetzt und einer hohen Scherung unterworfen. Die erhaltene Dispersion wird nachfolgend mit 17,5 Teilen Aluminiumsulfat in 122,5 Teilen Wasser verdünnt. Dieses Produkt ist ohne weitere Fixiermittel, wie Aluminiumsulfat, Polyaluminiumchlorid usw., zur Papierleimung geeignet. Das Produkt unterscheidet sich in der Viskosität nicht von der aluminiumsalzfreien Einstellung und ist auch bei Temperatureinwirkung stabil.

### Beispiel 6

5 Teile eines veresterten Harzes aus Beispiel 1 werden mit 45 Teilen Paraffin versetzt und auf 200°C erhitzt. Diese Mischung wird mit einer Lösung von 12,2 Teilen kationischer Stärke und 1 Teil Ligninsulfonat in 74,8 Teilen Wasser versetzt und einer hohen Scherung unterworfen. Die erhaltene Dispersion wird nachfolgend mit 17,5 Teilen Aluminiumsulfat in 122,5 Teilen Wasser verdünnt. Dieses Produkt ist ohne weitere Fixiermittel, wie Aluminiumsulfat, Polyaluminiumchlorid usw., zur Papierleimung geeignet. Das Produkt unterscheidet sich in der Viskosität nicht von der aluminiumsalzfreien Einstellung und ist auch bei Temperatureinwirkung stabil.

### Beispiel 7

25 Teile eines veresterten Harzes aus Beispiel 1 werden mit 25 Teilen Paraffin versetzt und auf 200°C erhitzt. Diese Mischung wird mit einer Lösung von 12,2 Teilen kationischer Stärke und 1 Teil Ligninsulfonat in 74,8 Teilen Wasser versetzt und einer hohen Scherung unterworfen. Die erhaltene Dispersion wird nachfolgend mit 17,5 Teilen Aluminiumsulfat in 122,5 Teilen Wasser verdünnt. Zusätzlich werden noch 20 Teile eines 12,5%igen Epichlorhydrinharzes zugesetzt. Das Produkt leimt ohne weitere Fixiermittel und ist lagerstabil.

In allen Fällen wurden mit den hergestellten Leimungsmitteln eine ausgezeichnete Oberflächen- und Masseleimung im Neutralbereich erzielt. Die Produkte waren ohne weitere Maßnahmen lagerstabil und zeigten auch keine Neigung zur Thixotropie.

## Patentansprüche

1. Leimungsmittel ohne Casein für die Oberflächen- und Masseleimung von Papier, dadurch gekennzeichnet, daß es eine wässrige Dispersion eines Esters eines unverstärkten, disproportionierten oder verstärkten Kolophoniumharzes, dessen Basisharz Tallharz, Balsamharz oder Wurzelharz sein kann, mit Stärke und einem Ligninsulfonat enthält.

2. Leimungsmittel gemäss Anspruch 1, dadurch gekennzeichnet, dass es Mischungen der genannten Harze enthält.

3. Leimungsmittel gemäß Anspruch 1 oder 2, dadurch gekennzeichnet, daß 0,5-25 % des Harzes durch Alkylketendimer ersetzt sind.

4. Leimungsmittel gemäß einem der Ansprüche 1 bis 3, dadurch gekennzeichnet, daß 1-99 Gew.-% Wachse, Paraffine, Fettsäuren oder andere Substitutionsprodukte oder deren Gemische, bezogen auf das Gemicht des Kolophoniumharzes, zugesetzt werden.

5. Leimungsmittel gemäss einem der Ansprüche 1 bis 4, dadurch gekennzeichnet, daß die Stärke anionisch, kationisch oder nativ oder ein Gemisch davon ist.

6. Leimungsmittel gemäß einem der Ansprüche 1 bis 5, dadurch gekennzeichnet, daß es 3 - 60, vorzugsweise 10 - 30 Gew.-% Stärke und 0,5 - 10, vorzugsweise 1 - 3 Gew.-% Ligninsulfonat, jeweils bezogen auf das Gewicht des Harzes und der Harzersatzstoffe, enthält.

7. Leimungsmittel gemäß einem der Ansprüche 1 bis 6, dadurch gekennzeichnet, daß es zusätzlich das Fällungsmittel in Form eines Aluminiumsalzes oder eines Aluminiumsalzgemisches enthält.

8. Leimungsmittel gemäß einem der Ansprüche 1 bis 7, dadurch gekennzeichnet, daß es zusätzlich eine kationische Verbindung enthält.

## Claims

1. Sizing composition without casein for surface and internal sizing of paper, characterized in that it comprises an aqueous dispersion of an ester of a non-strengthened, disproportionated or strengthened colophony resin, the base resin of which can be tall resin, balsam resin or root resin, with starch and a ligninsulfonate.

2. Sizing composition according to claim 1, characterized in that it comprises mixtures of the resins mentioned.

3. Sizing agent according to claim 1 or 2, characterized in that 0.5 - 25% of the resin is replaced by an alkylketene dimer.

4. Sizing composition according to one of claims 1 to 3, characterized in that 1 - 99 wt.% waxes, paraffins, fatty acids or other substitution products or mixtures thereof, based on the weight of the colophony resin, are added.

5. Sizing composition according to one of claims 1 to 4, characterized in that the starch is anionic, cationic or native or a mixture thereof.

6. Sizing composition according to one of claims 1 to 5, characterized in that it comprises 3 - 60, preferably 10 - 30 wt.% starch and 0.5 - 10, preferably 1 - 3 wt.% ligninsulfonate, in each case based on the weight of the resin and of the resin substitutes.

7. Sizing composition according to one of claims 1 to 6, characterized in that it additionally comprises the precipitant in the form of an aluminium salt or an aluminium salt mixture.

8. Sizing composition according to one of claims 1 to 7, characterized in that it additionally comprises a cationic compound.

## Revendications

1. Agent d'encollage sans caséine pour l'encollage en surface et en masse de papier, caracrtérisé en ce qu'il contient une dispersion aqueuse d'un ester une résine de colophane non renforcée, dismutée ou renforcée, dont la résine de base peut être une résine d'huile de pin, une résine tacamaque ou une résine de racine, avec de l'amidon et un sulfonate de lignine.

2. Agent d'encollage selon la revendication 1, caractérisé en ce qu'il contient des mélanges des résines citées.

3. Agent d'encollage selon la revendication 1 ou 2, caractérisé en ce que 0,5-25 % de la résine sont remplacés par un dimère d'alkylcétène.

4. Agent d'encollage selon l'une quelconque des revendications 1 à 3, caractérisé en ce que sont ajoutés 1-99 %en poids de cires, de paraffines, d'acides gras ou d'autres produits de substitution ou des mélanges de ceux-ci, rapportés au poids de la résine de colophane.

5. Agent d'encollge selon l'une quelconque des revendications 1 à 4, caractérisé en ce que l'amidon est anionique, cationique ou natif ou est un mélange de ceux-ci.

6. Agent d'encollage selon l'une quelconque des revendications 1 à 5, caractérisé en ce qu'il contient 3-60, de préférence 10-30 % en poids d'amidon et 0,5-10, de préférence 1-3 % en poids de sulfonate de lignine, rapportes à chaque fois au poids de la résine et de la matière de remplacement de la résine.

7. Agent d'encollage selon l'une quelconque des revendications 1 à 6, caractérisé en ce qu'il contient en outre l'agent de précipitation dans la forme d'un sel d'aluminium ou d'un mélange de sels d'aluminium.

8. Agent d'encollage selon l'une quelconque des revendications 1 à 7, caractérisé en ce qu'il contient en outre un composé cationique.
